## Europäisches Patentamt

## European Patent Office

## Office européen des brevets

(11) Veröffentlichungsnummer: **0 177 856**
**A2**

(12) # EUROPÄISCHE PATENTANMELDUNG

(21) Anmeldenummer: **85112269.7**

(22) Anmeldetag: **27.09.85**

(51) Int. Cl.⁴: **G 03 B 27/34**

(30) Priorität: **09.10.84 DE 3437047**

(43) Veröffentlichungstag der Anmeldung: **16.04.86**
**Patentblatt 86/16**

(84) Benannte Vertragsstaaten: **CH DE IT LI**

(71) Anmelder: **AGFA-GEVAERT Aktiengesellschaft,**
**D-5090 Leverkusen 1 (DE)**

(72) Erfinder: **Zahn, Wolfgang, Dr., Landfriedstrasse 1,**
**D-8000 München 90 (DE)**
Erfinder: **Findeis, Günter, Dipl.-Phys.,**
**Wallbergstrasse 18d, D-8021 Sauerlach (DE)**
Erfinder: **Biedermann, Ernst, Dipl.-Phys.,**
**Edelweissstrasse 6, D-8021 Taufkirchen (DE)**

(54) **Fotografisches Kopiergerät.**

(57) Die Erfindung betrifft ein fotografisches Kopiergerät, insbesondere Rollenkopiergerät mit einer Auflageebene für die Kopiervorlagen, einer in festem Abstand dazu angeordneten Trägerebene für das lichtempfindliche Material und einem dazwischen liegenden Objektiv anpaßbarer Brennweite, das derart ausgebildet und angeordnet ist, daß es auch bei unterschiedlichen Abbildungsmaßstäben die Vorlagenebene in die Kopieträgerebene scharf abbildet. Das Objektiv umfaßt eine Trägerplatte (10) und einen in die Platte einsetzbaren Distanztubus (14), an dessen beiden Enden je eine zumindest ein Teilobjektiv bildende Linsengruppe (15, 16) einsetzbar ist.

ACTORUM AG

AGFA-GEVAERT
Aktiengesellschaft

Patentabteilung

0177856

D-5090 Leverkusen 1

hu-hh

Fotografisches Kopiergerät

---

Die Erfindung betrifft ein fotografisches Kopiergerät nach dem Oberbegriff des Anspruchs 1.

Insbesondere bei Rollenkopiergeräten bietet die Bauweise mit Vorlagen- und Kopierebene in festem Abstand für den Vorlagen- und den Papiertransport erhebliche Vorteile. Andererseits ist bei solchen Geräten häufig eine große Zahl von verschiedenen Abbildungsmaßstäben notwendig, um Kopiervorlagen unterschiedlicher Größe auf die verschiedensten Papierformate abzubilden. Bei sogenannten Universalprintern kann dies allein für randlose Kopien zu einer Anzahl von Abbildungsmaßstäben in der Größenordnung von 100 führen. Für diesen Zweck sind zwar bereits Varioobjektive vorgeschlagen worden, die etwa nach der Lehre der DE-OS P 33 39 960 zwei Lin-

A-G 1991

sengruppen aufweisen, die je nach Einstellung ihrer Lage längs der optischen Achse einen anderen Abbildungsmaßstab ergeben, ohne daß die Schärfe der Abbildung
darunter leidet. Die Einstellung auf gewisse Abbildungsmaßstäbe erfordert jedoch eine sehr genaue Positionierung, die zudem durch Toleranzen in der Schnittweite der einzelnen Linsengruppen unterschiedlich vorgenommen werden müssen. Der hierfür erforderliche
Steuerungsaufwand liegt sehr hoch.

Ziel der Erfindung ist es, eine große Anzahl von Abbildungsmaßstäben mit einer vergleichsweise geringen Anzahl optischer Bauelemente zu ermöglichen.

Diese Aufgabe wird gelöst durch die im Anspruch 1 beschriebene Erfindung. Die Aufteilung eines Objektivs in
eine Trägerplatte, einen Distanztubus und zwei Linsengruppen mit der Möglichkeit, diese in zueinander unterschiedlichem Abstand zu justieren, erlaubt es, für
einen Abbildungsmaßstab lediglich einen speziellen Tubus vorzusehen und die Linsengruppen in durch die Länge
und Lage des Tubus vorgegebener Lage zueinander zu justieren und dieses zusammengesetzte Objektiv in der
richtigen Lage in das Gerät einzusetzen. Die Trägerplatte ist dabei für alle Abbildungsmaßstäbe brauchbar,
die Linsengruppen für eine ganze Reihe von Abbildungsmaßstäben und nur der Tubus muß jedes Mal angepaßt sein.

Weitere Einzelheiten und Vorteile ergeben sich aus den
Unteransprüchen im Zusammenhang mit der Beschreibung

A-G 1991

eines Ausführungsbeispiels, das anhand von Figuren eingehend beschrieben ist. Es zeigen:

Fig. 1  ein fotografisches Rollenkopiergerät in einem stark schematisierten Längsschnitt,

Fig. 2  die Abbildungsanordnung gemäß Fig. 1 in einer auseinandergezogenen, perspektivischen Darstellung.

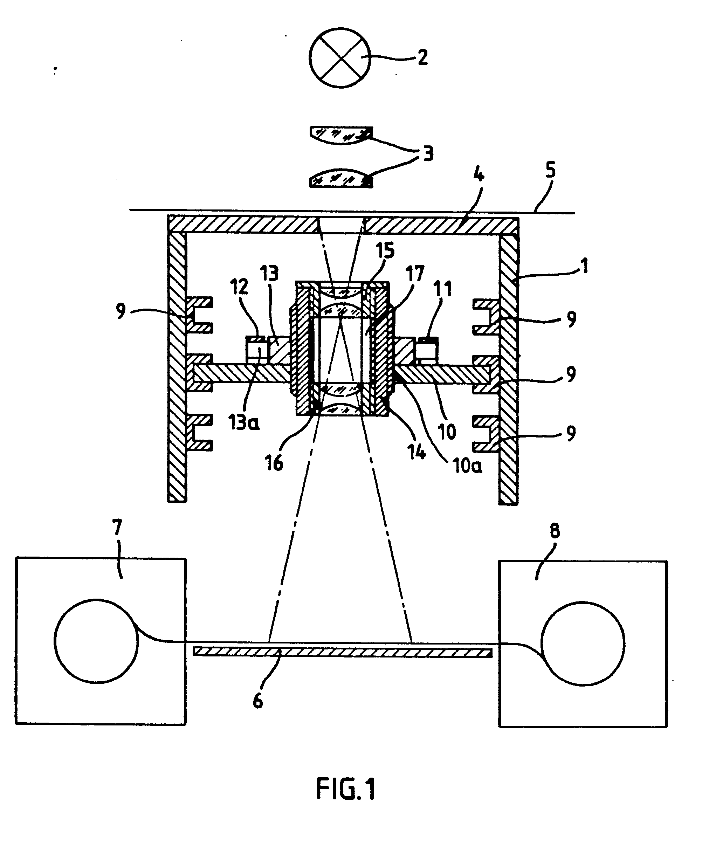

In Fig. 1 ist mit 1 das Gestell eines Rollenkopiergerätes bezeichnet, das eine Vorlagenbühne 4 trägt, auf der durch nicht gezeigte Transportmittel oder von Hand ein Vorlagenstreifen 5 verschiebbar angeordnet ist. Die Vorlagen 5 werden beleuchtet durch eine Lichtquelle 2 und einen Kondensor 3.

In dem darunterliegenden Teil des Gerätes ist eine Abwickelkassette 7 und eine Aufwickelkassete 8 für fotografisches Kopiermaterial vorgesehen, das durch bekannte Führungsmittel und Transporteinrichtungen über eine Papierbühne 6 hinweggeführt wird. Zwischen Vorlagenbühne 5 und Kopierebene 6 ist eine optische Abbildungseinrichtung angeordnet, die im folgenden näher beschrieben ist.

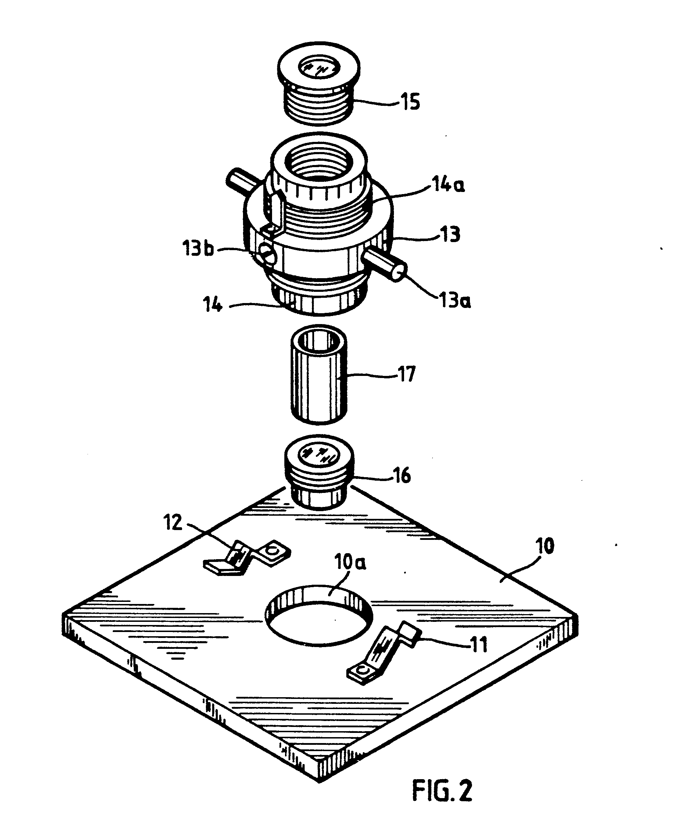

An zum Strahlengang etwa parallelen Seitenwänden des Kopiergerätegestells 1 sind U-förmige Führungsschienen 9 in verschiedenen Höhenlagen angebracht, in die

A-G 1991

eine Trägerplatte 10 mit einer Öffnung 10a einschiebbar ist. Auf der Trägerplatte angeordnet sind in Fig. 2 dargestellte, gebogene Blattfedern 11 und 12, die ein in die Öffnung 10a eingesetztes Objektiv in Anlage an der Tragplatte 10 halten.

Das Objektiv selbst besteht aus einem Tubus 14, welcher ein Außengewinde 14a für einen Stellring 13 mit entsprechendem Innengewinde aufweist. Der Stellring 13 trägt außerdem zwei gegenüberliegende, radial verlaufende Stifte 13a, an denen die Arretierungsfedern 11 und 12 angreifen. Der Tubus trägt ferner ein Innengewinde, in das eine obere Linsengruppe 15 und eine untere Linsengruppe 16 einschraubbar ist. Die Position der Linsengruppe im Tubus kann entweder durch einen Bund an der Fassung der jeweiligen Linsengruppen gegeben sein oder durch eine Distanzhülse 17, die in das Innengewinde des Tubus eingeschraubt ist.

Die Linsengruppen 15, 16 können entweder als die beiden Linsengruppen eines Varioobjektivs ausgebildet sein oder die obere Linsengruppen 15 als vollständiges Objektiv, dem wahlweise als Vorsatzlinse die untere Linsengruppe 16 zugeschaltet werden kann.

Für jeden Abbildungsmaßstab ist ein spezieller Tubus vorgesehen, in dem der Stellring 13 mittels der Schraube 13b so positioniert ist, daß er bei Einsetzen in die Trägerplatte 10 und Einschieben dieser Platte in die

A-G 1991

0177856

richtige Führung 9 richtig positioniert ist. Vor dem Einschieben sind natürlich die beiden Linsengruppen bzw. bei einem Objektiv mit Vorsatzlinse eventuell nur das Objektiv durch Einschrauben bis zum Anschlag in die richtige Position zu bringen.

Durch diese Aufteilung der Funktionen auf die Trägerplatte für die Lage im Gerät, auf den Tubus für die Lage der Linsengruppen gegenüber der Trägerplatte und schließlich auf einige wenige Linsengruppen für die eigentliche Abbildung, lassen sich mit verhältnismäßig geringen Kosten für die jeweils erforderlichen Tuben nahezu beliebig viele Abbildungsmaßstäbe verwirklichen.

A-G 1991

**Ansprüche**

1. Fotografisches Kopiergerät, insbesondere Rollenkopiergerät mit einer Auflageebene für die Kopiervorlagen, einer in festem Abstand dazu angeordneten Trägerebene für das lichtempfindliche Material und einem dazwischen liegenden Objektiv anpaßbarer Brennweite, das derart ausgebildet und angeordnet ist, daß es auch bei unterschiedlichen Abbildungsmaßstäben die Vorlagenebene in die Trägerebene scharf abbildet, dadurch gekennzeichnet, daß das Objektiv eine Trägerplatte (10) und einen in die Platte einsetzbaren Distanztubus (14) umfaßt, in den zumindest eine ein Teilobjektiv bildende Linsengruppe (15, 16) einsetzbar ist.

2. Fotografisches Kopiergerät nach Anspruch 1, dadurch gekennzeichnet, daß die beiden Linsengruppen (15, 16) ein Grundobjektiv (15) und eine wahlweise einsetzbare Vorsatzlinse (16) sind.

3. Fotografisches Kopiergerät nach Anspruch 1, dadurch gekennzeichnet, daß die beiden Linsengruppen (15, 16) die beiden beweglichen Glieder eines aus zwei Gliedern zusammengesetzten Varioobjektivs sind und jedem einzustellenden

A-G 1991

Abbildungsmaßstab ein Distanztubus (14) zugeordnet ist.

4. Fotografisches Kopiergerät nach Anspruch 2 oder 3, dadurch gekennzeichnet, daß die Trägerplatte (10) in Führungen (9) verschiedener Höhe einsetzbar ist.

5. Fotografisches Kopiergerät nach einem der vorangehenden Ansprüche, dadurch gekennzeichnet, daß der Distanztubus (14) für mehrere Abbildungsmaßstäbe gleiche Abmessungen aufweist, auf der Innenseite mit den Linsengruppen (15, 16) entsprechenden Schraubgewinden versehen ist und durch einen in einem Außengewinde geführten Stellring (13) in der Höhe einstellbar und durch Querschrauben (13b) fixierbar ist.

6. Kopiergerät nach einem der vorangehenden Ansprüche, dadurch gekennzeichnet, daß in dem Distanztubus (14) eine insbesondere mittels eines Innengewindes des Tubus in der Höhe einstellbare Distanzhülse (17) fixierbar angeordnet ist.

Hierzu 2 Blatt Zeichnungen

A-G 1991

FIG.1

FIG. 2